# EUROPEAN PATENT SPECIFICATION

(11) **EP 2 675 942 B1**
(45) Date of publication and mention of the grant of the patent: **06.04.2016**
(21) Application number: 12703030.2
(22) Date of filing: 30.01.2012
(51) Int. Cl.: C25D 3/56, B32B 15/01, C25D 5/48

(54) **ALKALINE AQUEOUS ZINC-IRON ALLOY PLATING BATH AND METHOD USING THE SAME**
ALKALISCHES WÄSSRIGES BAD FÜR EINE ZINK-EISENLEGIERUNGSPLATTIERUNG SOWIE VERFAHREN UNTER DESSEN VERWENDUNG
BAIN ALCALIN AQUEUX POUR LE DÉPÔT ÉLECTROLYTIQUE D'UN ALLIAGE ZINC-FER ET PROCÉDÉ L'UTILISANT

(30) Priority: 15.02.2011 EP 11154475
(43) Date of publication of application: 25.12.2013
(73) Proprietor: Atotech Deutschland GmbH, 10553 Berlin (DE)
(72) Inventor: BEDRNIK, Lukas, 468 41 Tanvald (CZ); HAAS, Frantisek, 46601c Jablonec nad Nisou (CZ); LANG, Nadine, 13187 Berlin (DE); VOGEL, Roland, 12247 Berlin (DE)
(74) Representative: Wonnemann, Jörg
(86) International application number: PCT/EP2012/051468
(87) International publication number: WO 2012/110304

(56) References cited:
- DE-A1-102007 060 200
- US-A- 4 540 472
- US-A- 4 541 903
- US-A- 4 581 110
- US-A- 5 405 523
- US-A- 5 435 898
- US-A1- 2004 067 314
- US-B1- 6 652 728
- NARASIMHAMURTHY V ET AL: "Electrodeposition of Zinc-Iron from an Alkaline Sulfate Bath Containing Triethanolamine", METAL FINISHING, ELSEVIER, NEW YORK, NY, US, vol. 95, no. 9, 1 September 1997 (1997-09-01), pages 44-47, XP004092423, ISSN: 0026-0576, DOI: DOI:10.1016/S0026-0576(97)85858-8 cited in the application

## Description

### Field of the Invention

The invention relates to a plating bath for deposition of a hard zinc-iron alloy layer material having a bright appearance and which is useful to provide corrosion protection to a metallic substrate.

### Background of the Invention

Zinc-nickel alloys are well known as corrosion protection layers for metallic substrates. Such alloys are deposited from alkaline plating baths by electroplating. Typical plating bath compositions are disclosed for example in US 5,405,523, US 5,435,898, US 6,652,728 B1 and US 6,706,167 B1. The nickel content in zinc-nickel alloy layers deposited from such plating bath compositions ranges from 12 to 16 wt.-%. Zinc-nickel alloy layers provide a sufficient corrosion protection to metallic substrates such as iron based alloys and at the same time have a bright appearance and a Vickers hardness of >500 HV0.0025.

Due to the toxicity of nickel ions released in small quantities from such zinc-nickel alloy layers alternative zinc alloy layers with lower toxicity but similar properties in terms of corrosion protection, bright appearance and sufficient hardness are needed.

Plating bath compositions as those disclosed in US 5,405,523, US 5.435.898, US 6.652,728 B1 and US 6,706.167 B1 can be used to deposit zinc-iron alloys as well. However, zinc-iron alloys deposited from such plating bath compositions have an iron content of ≤ 1 wt.-% iron and do not fulfil the requirements in terms of corrosion protection and hardness of the alloy layer. Zinc-iron alloys having a higher iron content deposited from such plating bath compositions show an inhomogeneous iron distribution in the deposited layers and therefore provide no sufficient corrosion protection to the underlying substrate.

In case of a higher iron ion concentration In such zinc-iron alloy plating bath compositions a mixture of various intermetallic zinc-iron phases is deposited. Furthermore, a non-uniform grain structure is obtained. This leads to a poor reproducibility of deposit properties such as corrosion protection properties, hardness and appearance.

An alkaline process for deposition of zinc-iron alloy layers having an iron content of 15-25 wt.-% is described by V. Narasimhamurthy. B.S. Sheshadri, Metal Finishing (1997) 44. However, the process suffers from a steep increase of iron content In the coating at current densities lower than 1 A/dm². Hence, such a plating bath is unsuitable for plating of substrates having a complex shape.

A plating bath for deposition of zinc-iron alloy layers having an iron content of 17-20 wt.-% is disclosed in CN 101545125 A. A zinc-iron alloy layer material deposited from such a plating bath and successively coated with a Cr³⁺ ion containing passivation layer provides a corrosion protection which is not sufficient for most applications. Formation of 5 % white rust in a neutral salt spray test was already observed after 65 h in case of a zinc-iron layer material containing 17.5 wt.-% iron. Furthermore, use of up to 1 g/l EDTA in the process is a severe limitation for industrial application.

A method for electroplating a zinc-iron alloy containing 0.02 to 20 % of iron from an alkaline plating bath is disclosed in US 4,581,110. Zinc-iron alloy deposits obtained from the plating bath compositions disclosed in said document show the highest corrosion resistance for a zinc-iron alloy having an iron content of 8.9 wt.-% whereas zinc-iron alloy deposits having an iron content of 17.1 wt.-% and 19.5 wt.-% show a less good corrosion resistance (Table 2).

Zinc-iron alloys containing 10 to 30 wt.-% Iron obtainable from an acidic plating bath at unusual high current densities In the range of 80 to 200 A/dm² are disclosed in US 4,541,903. The acidic plating bath compositions disclosed in this document contain 5.6 to 19.5 g/l iron Ions. Such a high amount of iron is required to avoid burnt deposits on edges and a reduced cathode deposition efficiency.

An adherent iron-zinc coating containing 10 to 20 % iron and an acidic zinc-iron plating bath composition for the deposition of such an iron-zinc coating is disclosed In US 4,540,472. The current density range of 400 to 1600.amps/ft² required for the alloy deposition is very high.

### Objective of the present Invention

It is therefore the objective of the present invention to provide an alkaline aqueous plating bath suitable for deposition of a zinc-iron alloy layer material with a high homogeneity in terms of alloy composition, corrosion protection properties, hardness and bright appearance.

Another object of the present invention is to provide a process for deposition of zinc-iron alloy layer material with a high homogeneity in terms of alloy composition, corrosion protection properties, hardness and bright appearance.

The first objective is solved by an alkaline aqueous zinc-iron plating bath according to claim The second objective is solved by a process for depositing a zinc-iron alloy layer material having a body centred cubic crystal structure of the Γ-phase with a (330) texture and an iron content in the range of 12 to 20 wt.-% comprising the steps
(i) providing a metallic substrate and
(ii) contacting the substrate with said alkaline aqueous plating bath according to any of claims 1 to 5 simultaneously applying a current to the substrate.

Formation of less than 1 % white rust in a neutral salt spray test according to ISO 9227 NSS of a steel substrate coated with a zinc-iron alloy layer material according to the present invention and a passivation layer containing Cr³⁺ ions is only observed after 672 h.

The zinc-iron alloy layer material has a bright appearance and a Vickers hardness exceeding 380 HV0.0025.

### Brief Description of the Figures

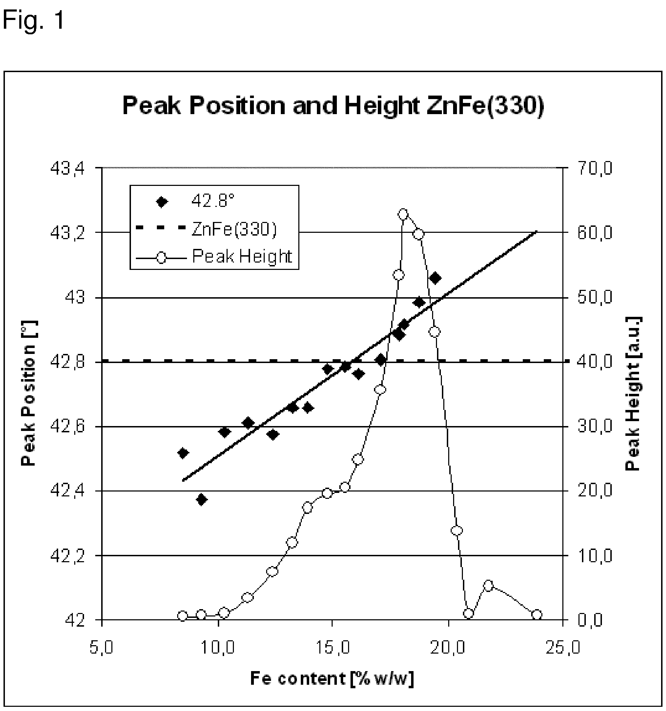

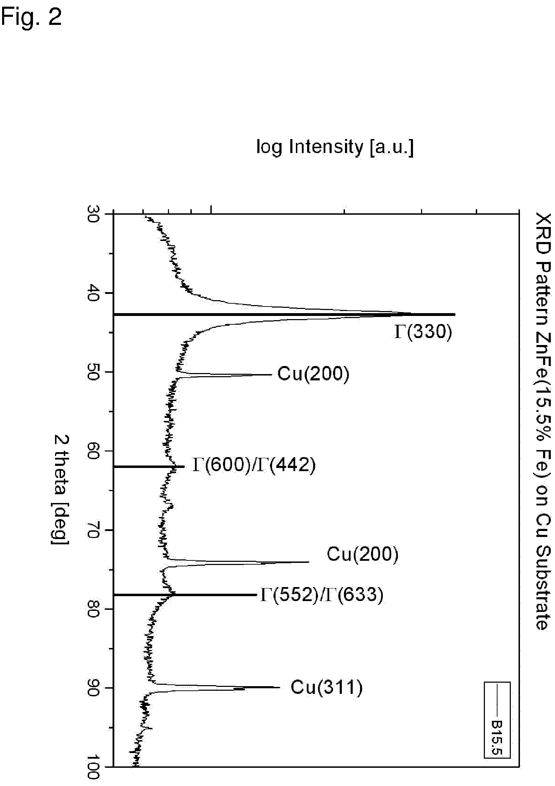

Figure 1 shows the position and height of the Γ-ZnFe alloy phase (330) reflection (Cu k alpha) as a function of the iron content in the deposited layer. Figure 2 shows the results from X-ray diffraction measurements (Cu k alpha) of a zinc-iron alloy layer having an iron content of 15.5 wt.-% deposited by the process according to the present invention.

### Detailed Description of the Invention

The zinc-iron alloy layer material shows a narrow range of 12 to 20 wt.-% iron. The average concentration of iron is 16 wt.-%. The observed concentration of iron and further evidence by X-ray diffraction measurements of zinc-iron alloy layers having an iron content in the range of 12 to 20 wt.-% show that an exclusive presence of the body centred cubic Γ-ZnFe alloy phase is obtained by the process according to the present invention. Figure 1 shows the peak position of the (330) reflection of the Γ-ZnFe alloy phase as determined by X-ray diffraction measurements using Cu k alpha radiation. The average (330) reflection position is 42.8° (Cu k alpha).

Surprisingly, the zinc-iron alloy layer material deposited using the plating bath according to the present invention has a strong crystallographic (330) texture which is reflected by the exclusive occurrence of the (330) reflection of the Γ-ZnFe alloy phase determined by X-ray diffraction measurements (Fig. 2). All other reflections observed belong to the underlying copper substrate coated for the measurement.

The term "texture" as used herein carries the meaning that would be understood by those of skill in the crystallographic arts. The crystallographic texture is caused by a preferred orientation of individual crystallites in the polycrystalline zinc-iron layer material according to the present invention.

The (330) plane has the highest density of atoms in the body centred cubic crystal structure of the Γ-ZnFe alloy phase. Said strong crystallographic (330) texture is observed within the whole current density range of 0.01 to 10 A/dm² which means on all areas of a substrate having a complex shape. Accordingly, the zinc-iron alloy layer material shows very homogeneous corrosion protection properties for an underlying substrate, a high hardness and a bright appearance.

The body centred cubic crystal structure of the Γ-phase with a (330) texture and an iron content in the range of 12 to 20 wt.-% is obtained in a current density range from 0.01 to 10 A/dm².

Hence, the homogeneous properties are also achieved in case of substrates having a complex shape, such as fasteners, fixing elements, door hinges, lock casings, and the like.

Up to date, the Γ-ZnFe alloy phase can only be obtained in form of a bulk material without the beneficial crystallographic (330) texture by powder metallurgical preparation methods.

The zinc-iron alloy layer material deposited using the plating bath according to the present invention is not only
obtained by a wet chemical deposition method but also reveals a strong crystallographic (330) texture and is, accordingly to XRD measurements (Example 3), obtained in a pure form, i.e. the Γ-ZnFe alloy phase.

The different crystallographic structure of the zinc-iron alloy layer material deposited using the plating bath according to the present invention compared to zinc-iron alloy layer materials known in the art is furthermore demonstrated by enhanced corrosion protection properties. It is assumed by the inventors, that zinc-iron alloy layer materials having an iron content in the range of 17-20 wt.-% as disclosed in CN 101545125 A are a mixture of different zinc-iron alloy phases.

Typical metallic substrate materials are steel and other ferrous base metals. Formation of less than 1 % white rust in a neutral salt spray test according to ISO 9227 NSS of a steel substrate coated with a zinc-iron alloy layer material according to the present invention and a passivation layer containing Cr³⁺ ions is only observed after 600 to 1000 h.

The zinc-iron alloy layer material has a bright appearance and a Vickers hardness exceeding 380 HV0.001.

The zinc-iron alloy layer material having a body centred cubic crystal structure of the Γ-phase with a (330) texture and an iron content in the range of 12 to 20 wt.-% is obtainable by a process comprising the steps of
(i) providing a metallic substrate,
(ii) contacting the substrate with said alkaline aqueous plating bath comprising
   - 4 to 6 g/l zinc ions
   - 1 to 3 g/l iron ions
   - 25 to 35 g/l hydroxyl ions,
   - 0.5 to 2.5 g/l of a quaternary ammonium polymer and
   - at least one complexing agent selected from the group consisting of hydroxyl carboxylic acid salts
and simultaneously applying a current to the substrate.

The aqueous plating bath comprises zinc ions in a concentration of 4 to 6 g/l. Suitable sources for the zinc ions are water soluble zinc salts, zinc oxide and zinc metal. The water soluble zinc salts are selected from the group comprising zinc sulphate, zinc chloride, zinc nitrate, zinc gluconate and zinc citrate.

The preferred sources of zinc ions are ZnO and zinc metal.

The Zn content is generally maintained during use of the alkaline plating bath by dissolution of Zn metal.

The concentration of iron ions in the aqueous plating bath ranges from 1 to 3 g/l, more preferably from 1.5 g/l to 2.5 g/l. Suitable sources for iron ions are water soluble salts of iron, such as ferrous sulphate, ferric sulphate and ferric chloride. The oxidation state of iron in the source material of the iron ions is not important as long as the source of iron ions is soluble in the alkaline plating bath.

The aqueous plating bath contains 25 to 35 g/l hydroxyl ions which can be added as NaOH, KOH and NH₄OH.

The aqueous plating bath further contains a quaternary ammonium polymer in a concentration of 0.5 to 5 g/l, more preferably from 1 g/l to 2 g/l.

Preferably, the quaternary ammonium polymer is an ureylene quaternary ammonium polymer.

More preferably, the quaternary ammonium polymer is selected from polymers according formula (1) 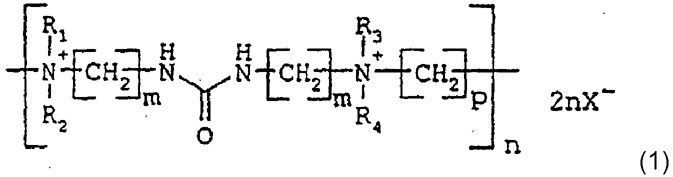 wherein m is 2 or 3, n is at least 2, R₁, R₂, R₃ and R₄ are the same and are selected from methyl, ethyl and hydroxyethyl, p ranges from 3 to 12 and X- is selected from Cl⁻, Br⁻ and I⁻.

The aqueous plating bath contains at least one complexing agent which is selected from hydroxyl carboxylic acid salts with sodium and potassium. The concentration of the at least one hydroxyl carboxylic acid salt ranges from 5 to 15 g/l, more preferably from 7 g/l to 12 g/l. Suitable complexing agents are selected from the group comprising citrates, tartrates, gluconates, glucoheptonates and glycollates of sodium and potassium.

Optionally the aqueous zinc-iron plating bath further comprises at least one alkanolamine compound. The concentration of the at least one optional alkanolamine compound ranges from 5 to 20 g/l, more preferably 8 g/l to 12 g/l. The at least one optional alkanolamine compound is selected from the group comprising monoethanolamine, diethanolamine, triethanolamine, propanolamine, N-methylethanolamine and N,N,N',N'-tetrakis-(2-hydroxypropyl)-ethylenediamine. The aqueous plating bath according to the present invention is free of strong complexing agents such as ethylenediamine tetraacetic acid, (nitrilo-triacetic acid, diethyl triamine penta-acetic acid, 1,3-propylene diamine penta-acetic acid and salts thereof.

The process for depositing a zinc-iron alloy having an iron content of 12 to 20 wt.-% comprises the steps
(i) providing a metallic substrate,
(ii) contacting the substrate with said alkaline aqueous plating bath comprising
and simultaneously applying a current to the substrate.

The substrate to be plated is cleaned by a typical pretreatment cycle for ferrous base materials, i.e. soak cleaning, electrocleaning, pickling and rinsing.

The substrate to be coated with the zinc-iron alloy layer material having an iron content of 12 to 20 wt.-% is contacted with the aqueous plating bath described above. A direct current is passed from an anode to the cathodic substrate during deposition. The current density applied ranges from 0.01 to 10 A/dm², more preferably from 1 to 3 A/dm². The aqueous plating bath is held at a temperature in the range of 15 to 45 °C, more preferably 20 to 30°C, during deposition.

The zinc-iron alloy layer material may be coated with a passivation layer. Such a passivation increases the corrosion protection for the underlying substrate material. Preferred passivation layers comprise Cr³⁺ ions which can be deposited from aqueous composition containing 2 to 10 g/l of Cr³⁺ ions, 2 to 20 g/l of nitrate, 0.5 to 2 g/l of fluoride and optionally 5 to 10 g/l of acid soluble colloidal silica and/or 0.2 g/l Co²⁺ ions. The passivation solution is kept in a pH range of 1.5 to 4.0 at 20 to 60°C.

The passivation layer may be coated with a sealing layer which even further enhances the corrosion protection of the underlying substrate and/or serves as a adhesion promoter for a paint.

### Examples

The invention will now be illustrated by reference to the following non-limiting examples.

### Plating procedure:

Steel sheets having a size of 70 x 70 x 1 mm³ were immersed in soak cleaner Uniclean 155 at 70°C for 30 min, rinsed, pickled in 15% hydrochloric acid for 30 s, rinsed, electrolytically cleaned in Nonacid 701 electrocleaner at 22°C for 30 s under cathodic and 30 s anodic polarization at current density of 2 A/dm², and finally rinsed in a 3 stage cascade rinse. Next, a zinc-iron alloy layer was deposited from a plating baths discussed in the respective examples.

The substrates were rinsed with water and then a passivation layer containing Cr³⁺ ions was deposited onto the zinc-iron alloy layer from a passivation bath EcoTri^{®} HC2 or Tridur^{®} Ultra (products of Atotech Deutschland GmbH).

The steel sheets were rinsed again with water and dried.

### Test methods:

For determination of alloy composition, separate samples made from Cu substrate were coated under same conditions as respective steel test samples. The alloy composition was measured on the Cu substrates with XRF spectrometry.

Neutral salt spray tests were performed according to ISO 9227 NSS and evaluated according to ISO 3000258. The results are given with the respective examples.

The hardness of zinc-iron alloy layer was determined with a Fischerscope H100C by instrumented indentation test according to ISO 14577. The applied stencil force was 10 to 50 mN. Vickers hardness was calculated from the measured indentation hardness H_{IT} according to the theoretical equation HV = 0.0945 H_{IT}.

Optical appearance was determined by optical inspection of the coated steel sheets. The desired appearance is denoted "bright" whereas "technically bright" means less bright than "bright".

### X-ray diffraction (XRD) measurements:

A Bruker D8 Discover diffractometer was used for all measurements in Examples 3 and 4. The XRD settings were the following:
   - anode: coppery = 1.5406 A;
   - detector: Vantec-1 (Position Sensitive Detector, PSD)
   - divergence slits: Goebel mirror (parallel beam) - 0.6 mm slit + soller slit
   - PSD angle: 3°
      - receiving slit width: 14 mm
      - anti-scattering slit width: 10 mm
   - theta/theta configuration - locked coupled 2 theta scan from 30° to 150° with a 0.04° step and 1 s.

### Comparative Example 1

A zinc-iron alloy layer was deposited onto a steel sheet from a plating bath composition disclosed in Example 17 in US 6.652,728 B1.

The iron content of the zinc-iron alloy is 0.6 wt.-%.

Formation of white rust was observed after 240 h salt spray test.

The hardness of the layer ranges from 150 to 220 HV0.0025.

The layer has a technically bright appearance.

### Comparative Example 2

A zinc-iron alloy layer was deposited onto a steel sheet from a plating bath comprising 7 g/l zinc ions, 1.5 g/l iron ions, 70 g/l NaOH, 25 ml/l of complexing agent and 1.2 g/l of a polymer according to formula (1) wherein R1, R2, R3 and R4 are methyl, m = 3 and p = 4.

The iron content of the zinc-iron alloy is 9 wt.-%.

The hardness of the layer is 300 HV0.001.

The characteristic (330) reflection of the Γ-ZnFe phase at 20 = 42.8° was not observed in the X-ray diffraction pattern (Fig. 1).

Formation of 1 % white rust was observed after 312 h salt spray test.

The layer has a bright appearance.

### Comparative Example 3

A zinc-iron alloy layer was deposited onto a steel sheet from a plating bath comprising 6 g/l zinc ions, 4 g/l iron ions, 70 g/l NaOH, 25 ml/l of complexing agent and 1.2 g/l of a polymer according to formula (1) wherein R1, R2, R3 and R4 are methyl, m = 3 and p = 4.

The iron content of the zinc-iron alloy is 21 wt.-%.

The hardness of the layer is 450 HV0.001.

A steep decrease of the relative intensity of the characteristic (330) reflection characteristic for the Γ-ZnFe phase at 20 = 42.8° was observed (Fig. 1). New reflections in the X-ray diffraction pattern at 20 = 35°, 73.2° and 128° were observed indicating a different crystallographic phase of the resulting zinc-iron alloy layer.

Formation of 1 % white rust was observed after 480 h salt spray test.

The layer has a bright appearance.

### Example 1

A zinc-iron alloy layer was deposited onto a steel sheet from a plating bath comprising 6 g/l zinc ions, 2 g/l iron ions, 70 g/l NaOH, 25 ml/l of complexing agent, 1.2 g/l of a polymer according to formula (1) wherein R1, R2, R3 and R4 are methyl, m = 3 and p = 4.

The iron content of the zinc-iron alloy is 16 wt.-%

The hardness of the layer is 440 HV0.001.

Formation of 1 % white rust was observed after 672 h salt spray test.

The layer has a bright appearance.

### Example 2

Different zinc-iron alloy layer materials having an iron content in the range of 8 to 24 wt.-% were deposited onto sample holders made of copper.

The as deposited zinc-iron alloy layers deposited onto copper sample holders were investigated by means of X-ray diffraction (XRD) measurements.

The occurrence of the (330) reflection of the Γ-ZnFe phase at 20 = 42.8° was investigated in respect to the iron content in the deposit by determining the position of said reflection and the relative intensity of said reflection. The data are summarized in Fig. 1.

The (330) reflection of the Γ-ZnFe phase is observed in the range of 12 to 20 wt.-% iron in the deposit. A maximum height of the (330) reflection was observed for a deposit having an iron content of approx. 18 wt.-%.

### Example 3

A zinc-iron alloy layer material having an iron content of 15.5 wt.-% was deposited onto a sample holder made of copper and subjected to a X-ray diffraction measurement.

The X-ray diffraction pattern of the zinc-iron alloy layer material having an iron content of 15.5 wt.-% is shown in Fig. 2 together with lines representing calculated reflection positions and relative intensities of the reflections for a Γ-ZnFe phase (data used for calculation taken from De Wit et al., J. Mater. Engineering and Performance, 8 (1999), 531). Reflections of the sample holder made of copper are also present in the diffraction pattern.

Fig. 2 shows that the layered material of the Γ-ZnFe phase having an iron content of 15.5 wt.-% which was obtained by a process according to the present invention has a (330) texture.

## Claims

1. An alkaline aqueous zinc-iron alloy plating bath comprising
- 4 to 6 g/l zinc ions
- 1 to 3 g/l iron ions
- 25 to 35 g/l hydroxyl ions,
- 0.5 to 2.5 g/l of a quaternary ammonium polymer and
- at least one complexing agent selected from the group consisting of hydroxyl carboxylic acids and salts thereof.

2. An alkaline aqueous zinc alloy plating bath according to claim 1 wherein the quaternary ammonium polymer is an ureylene quaternary ammonium polymer according to formula (1) 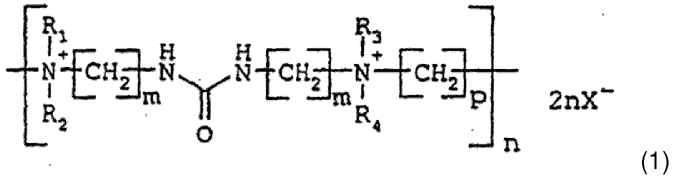 wherein m is 2 or 3, n is at least 2, R₁, R₂, R₃ and R₄ are the same and are selected from methyl, ethyl and hydroxyethyl, p ranges from 3 to 12 and X⁻ is selected from Cl⁻, Br⁻ and I⁻.

3. An alkaline aqueous zinc-iron alloy plating bath according to any of claims 1 and 2 further comprising an alkanolamine compound.

4. An alkaline aqueous zinc-iron alloy plating bath according to any of claims 1 to 3 wherein the alkanolamine compound is selected from the group comprising monoethanolamine, diethanolamine, triethanolamine, propanolamine, N-methylethanolamine and N,N,N',N'-tetrakis-(2-hydroxypropyl)-ethylenediamine.

5. An alkaline aqueous zinc-iron alloy plating bath according to any of claims 1 to 4 wherein the concentration of the alkanolamine compound ranges from 8 to 20 g/l.

6. A process for depositing a zinc-iron alloy layer material having a body centred cubic crystal structure of the Γ-phase, a (330) texture and an iron content of 12 to 20 wt.-% comprising the steps
(i) providing a metallic substrate,
(ii) contacting the substrate with an alkaline aqueous plating bath according to any of claims 1 to 5 and simultaneously applying a current to the substrate.

## Patentansprüche

1. Alkalisches wässriges Zink-Eisenlegierungs-Plattierungsbad, umfassend
- 4 bis 6 g/l Zinkionen,
- 1 bis 3 g/l Eisenionen,
- 25 bis 35 g/l Hydroxidionen,
- 0,5 bis 2,5 g/l eines quaternären Ammonium-Polymers und
- wenigstens ein Komplexierungsmittel ausgewählt aus der Gruppe bestehend aus Hydroxycarbonsäuren und Salzen davon.

2. Alkalisches wässriges Zinklegierungs-Plattierungsbad gemäß Anspruch 1, wobei das quaternäre Ammonium-Polymer ein Ureylen quaternäres Ammonium-Polymer gemäß Formel (1) ist, 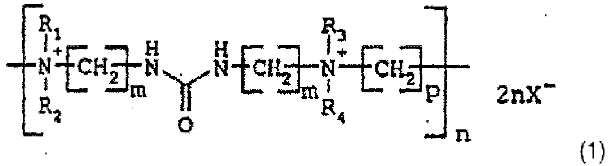 wobei m 2 oder 3 ist, n wenigstens 2 ist, R₁, R₂, R₃ und R₄ gleich sind und ausgewählt sind aus Methyl, Ethyl und Hydroxyethyl, p in dem Bereich von 3 bis 12 liegt und X⁻ ausgewählt ist aus Cl⁻, Br⁻ und I⁻.

3. Alkalisches wässriges Zink-Eisenlegierungs-Plattierungsbad gemäß einem der Ansprüche 1 und 2, ferner umfassend eine Alkanolaminverbindung.

4. Alkalisches wässriges Zink-Eisenlegierungs-Plattierungsbad gemäß einem der Ansprüche 1 bis 3, wobei die Alkanolaminverbindung ausgewählt ist aus der Gruppe umfassend Monoethanolamin, Diethanolamin, Triethanolamin, Propanolamin, N-Methylethanolamin und N,N,N',N'-Tetrakis-(2-hydroxypropyl)ethylendiamin.

5. Alkalisches wässriges Zink-Eisenlegierungs-Plattierungsbad gemäß einem der Ansprüche 1 bis 4, wobei die Konzentration der Alkanolaminverbindung in dem Bereich von 8 bis 20 g/l liegt.

6. Verfahren zum Abscheiden eines Zink-Eisenlegierung-Schichtmaterials mit einer raumzentrierten kubischen Kristallstruktur der Γ-Phase, einer (330)-Textur und einem Eisengehalt von 12 bis 20 Gew.-%, umfassend die Schritte
(i) Bereitstellen eines metallischen Substrats,
(ii) Inkontaktbringen des Substrats mit einem alkalischen wässrigen Plattierungsbad gemäß einem der Ansprüche 1 bis 5 und gleichzeitig Anlegen eines Stroms an das Substrat.

## Revendications

1. Bain de placage d'alliage zinc-fer aqueux alcalin comprenant
- 4 à 6 g/l d'ions de zinc
- 1 à 3 g/l d'ions de fer
- 25 à 35 g/l d'ions hydroxyle,
- 0,5 à 2,5 g/l de polymère d'ammonium quaternaire et
- au moins un agent complexant choisi dans le groupe constitué d'acides hydroxyl-carboxyliques et des sels de ceux-ci.

2. Bain de placage d'alliage zinc-fer aqueux alcalin selon la revendication 1 dans lequel le polymère d'ammonium quaternaire est un polymère d'uréylène-ammonium quaternaire selon la formule (1) 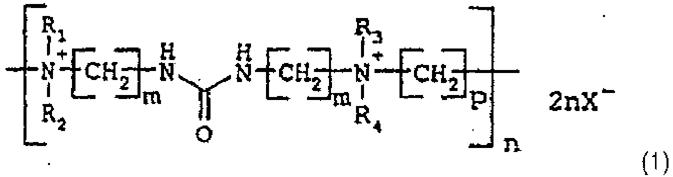 dans laquelle m est 2 ou 3, n est au moins 2, R₁, R₂, R₃ et R₄ sont identiques et sont choisis parmi méthyle, éthyle et hydroxyéthyle, p est dans la plage de 3 à 12 et X⁻ est choisi parmi Cl⁻, Br⁻ et I⁻.

3. Bain de placage d'alliage zinc-fer aqueux alcalin selon l'une quelconque des revendications 1 et 2 comprenant en outre un composé alcanolamine.

4. Bain de placage d'alliage zinc-fer aqueux alcalin selon l'une quelconque des revendications 1 à 3 dans lequel le composé alcanolamine est choisi dans le groupe comprenant la monoéthanolamine, la diéthanolamine, la triéthanolamine, la propanolamine, la N-méthyléthanolamine et la N,N,N',N'-tétrakis-(2-hydroxypropyl)-éthylènediamine.

5. Bain de placage d'alliage zinc-fer aqueux alcalin selon l'une quelconque des revendications 1 à 4 dans lequel la concentration du composé alcanolamine est dans la plage de 8 à 20 g/l.

6. Procédé pour déposer un matériau de couche d'alliage zinc-fer ayant une structure cristalline cubique à corps centré de phase r, une texture (330) texture et une teneur en fer de 12 à 20 % en poids comprenant les étapes de
(i) fourniture d'un substrat métallique,
(ii) mise en contact du substrat avec un bain de placage aqueux alcalin selon l'une quelconque des revendications 1 à 5 et simultanément applications d'un courant au substrat.
